# EUROPÄISCHE PATENTSCHRIFT

(11) **EP 3 012 197 B1**
(45) Veröffentlichungstag und Bekanntmachung des Hinweises auf die Patenterteilung: **16.08.2017**
(21) Anmeldenummer: 15189563.8
(22) Anmeldetag: 13.10.2015
(51) Int. Cl.: B65B 21/18, B65B 35/36, B65B 35/38, B65B 43/48, B65B 5/06, B65B 5/08, B65B 5/10, B65B 65/00, B65B 61/20, B65B 43/54

(54) **VORRICHTUNG UND VERFAHREN ZUM UMGANG MIT ARTIKELN**
DEVICE AND METHOD FOR HANDLING ITEMS
DISPOSITIF ET PROCEDE DE MANUTENTION D'ARTICLES

(30) Priorität: 20.10.2014 DE 102014221218
(43) Veröffentlichungstag der Anmeldung: 27.04.2016
(73) Patentinhaber: Krones Aktiengesellschaft, 93073 Neutraubling (DE)
(72) Erfinder: HOFSTETTER, Roland, 93073 Neutraubling (DE); HUTTER, Alban, 93073 Neutraubling (DE); FECHTER, Wolfgang, 93073 Neutraubling (DE)
(74) Vertreter: Benninger, Johannes

(56) Entgegenhaltungen:
- EP-A1- 1 410 995
- EP-A1- 1 544 113
- WO-A1-03/037723
- WO-A1-2013/010697
- WO-A2-2007/031238
- WO-A2-2010/003146
- DE-A1-102011 002 575
- US-A- 5 797 249
- US-A1- 2005 028 495

## Beschreibung

Die vorliegende Erfindung betrifft eine Vorrichtung zum Umgang mit Artikeln gemäß den Merkmalen des Oberbegriffes des Anspruchs 1 sowie ein Verfahren zum Umgang mit Artikeln gemäß den Merkmalen des Oberbegriffes des Anspruchs 13.

Der Umgang mit Artikeln sieht häufig vor, einzelne oder mehrere Artikel mit einer Umverpackung, beispielsweise einer Kartonage, zu versehen.

Dies erfolgt im Falle einzelner Artikel zu deren verbessertem Schutz und/oder zu deren verbesserter Verkaufspräsentation.

Im Falle mehrerer Artikel wird durch die Umverpackung zusätzlich ein Gebinde aus mehreren Artikeln erhalten.

Gebinde stellen eine effektive Art dar, den gleichzeitigen Umgang mit mehreren Artikeln zu ermöglichen, beispielsweise um den Transport mehrerer Artikel zugleich zu erleichtern. Gebinde aus mehreren zusammengehaltenen Artikeln stellen daher für viele Artikel, wie beispielsweise Getränkebehälter, die häufigste Variante von Verkaufseinheiten dar.

Bei den Artikeln kann es sich beispielsweise um Objekte, wie etwa verpackte oder unverpackte Gegenstände, Kartonagen, Behälter, wie etwa Getränkeflaschen oder Dosen, oder selbst wiederum um Gebinde aus mehreren Objekten handeln, wobei die Objekte eines Gebindes beispielsweise vermittels einer eine Gruppe von Objekten an deren Peripherie umgebenden Umfassung, wie beispielsweise einer Umreifung, einer Umverpackung, wie etwa einer Umwickelung, einem Schrumpfschlauch oder einer Kartonage oder eines Tragegestells, wie etwa eines Getränkekastens, zusammengehalten werden können, um nur einige denkbare Ausgestaltungen zu nennen.

Werden mehrere Artikel in einer Umverpackung zusammengefasst, so können diese einzeln, einer nach dem anderen, oder gruppenweise, beispielsweise bereits entsprechend ihrer Anordnung oder entsprechend eines Teils ihrer Anordnung in der Umverpackung in diese eingesetzt werden.

Einen wesentlichen Kostenfaktor beim Umgang mit Artikeln, beispielsweise in der Lebensmittel- und/oder Getränke- und/oder Verpackungstechnik und/oder in der Lebensmittel- und/oder Getränke- und/oder Verpackungsindustrie, stellt die Taktung dar, mit der innerhalb möglichst kurzer Zeit mit möglichst vielen Artikeln umgegangen werden kann. Je höher die Taktung, desto höher ist dabei der Artikelumsatz und um so höher und damit besser ist die Auslastung der hierfür vorgesehenen Maschinen, Anlagen und Einrichtungen. Die Taktung kann somit als Quotient der Anzahl von Artikeln und der Zeitdauer, innerhalb der mit dieser Anzahl von Artikeln umgegangen wird, beschrieben werden.

Um hohe Taktungen erzielen zu können, werden in der Verpackungstechnik und in der Verpackungsindustrie vollautomatische, auch als Umsetzungsmaschinen oder kurz Umsetzer bezeichnete Einrichtungen zum Umsetzen von Artikeln verwendet, welche in Verbindung mit der Bereitstellung von Umverpackungen innerhalb von Bruchteilen von Sekunden den oder die jeweils in eine Umverpackung umzusetzende Artikel aus einem Zulauf aus beispielsweise in einem oder mehreren Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich vermittels beispielsweise eines oder mehrerer Fördermittel transportierten Artikeln entnehmen und in die Umverpackung umsetzen.

Handelt es sich um verschließbare Umverpackungen, in welche die Artikel umgesetzt werden, kann gleichzeitig mit dem Einsetzen einer vollständigen Anzahl von in die Umverpackung einzusetzenden Artikeln oder im Anschluss hieran ein Verschließen der Umverpackungen erfolgen.

Durch DE 42 04 993 C1 ist eine Vorrichtung zum Umgang mit an eine kontinuierlich arbeitende Verpackungsmaschine zugeführten Artikeln bekannt. Die Vorrichtung umfasst eine Umsetzungsmaschine mit mehreren Greifköpfen für jeweils eine Gruppe von in eine Umverpackung in Form eines Getränkekastens umzusetzenden Artikeln. Jeder Greifkopf ist an einem Hebelmechanismus bestehend aus jeweils vier um parallele, horizontale Hebelachsen gelenkig miteinander verbundenen Hebeln angeordnet, von denen zwei um ebenfalls horizontale Hebelachsen schwenkbar an einem zentralen, um eine parallel zu den Hebelachsen verlaufende Zentralachse drehbar angetriebenen Zentralträger angeordnet sind. Parallel zu dem Zentralträger ist eine Scheibe mit Steuerkurven angeordnet, in welche an einem Teil der Hebel jeden Hebelmechanismus angeordnete Zapfen eingreifen und dadurch einen Bewegungsablauf der Greifköpfe während eines Umlaufs des Zentralträgers um die Zentralachse steuern. Die Vorrichtung umfasst darüber hinaus ein erstes Fördermittel in Form eines horizontalen Förderbands, welches der Umsetzungsmaschine Artikel in einer Transportrichtung normal zur Zentralachse und den parallel zu dieser verlaufenden Hebelachsen zu führt, sowie ein unterhalb des ersten Fördermittels verlaufendes zweites Fördermittel, welches die Getränkekästen ebenfalls in Transportrichtung transportiert. Die vermittels des Förderbands transportierten Artikel sind in Reihen angeordnet, werden an einem Ende des Förderbandes durch einen Anschlag angehalten und von einem der Greifköpfe nach dem anderen entgegengenommen. Nach Entgegennahme einer Gruppe von Artikeln durch einen Greifkopf fährt der Greifkopf in Transportrichtung des Förderbands mit, hebt die entgegengenommenen Artikel über das Ende des Förderbands an, während der Anschlag am Ende des Förderbands abgesenkt wird, und senkt die Artikel anschließend auf ein tieferliegendes Niveau in einen vermittels des Getränkekästen kontinuierlich in horizontaler Richtung transportierenden zweiten Fördermittels transportierten Getränkekasten ab. Nach dem Absenken führt der Greiferkopf durch die Steuerkurven gesteuert zunächst eine Bewegung parallel zur Transportrichtung aus, während die von dem Greiferkopf entgegengenommen und in einen entsprechenden vermittels des zweiten Fördermittels transportierten Getränkekasten platzierten Artikel losgelassen werden. Am Ende des ersten Fördermittels rücken derweil weitere Artikel nach. Die Übergabe der von einem Greiferkopf entgegengenommenen Artikel wird abgeschlossen, indem der Greiferkopf noch während dessen Bewegung in Transportrichtung wieder angehoben wird und der befüllte Getränkekasten dem zweiten Fördermittel folgend abtransportiert wird. Die weiteren Artikel, welche in der Zwischenzeit nachgerückt sind, können über einen weiteren Greifkopf entgegengenommen und in einem weiteren nachfolgenden Getränkekasten abgesetzt werden.

Durch DE 43 29 179 A1 ist eine ähnliche Vorrichtung bekannt, mit dem Unterschied, dass die Greiferköpfe nicht an einem um eine horizontale Zentralachse rotierenden Zentralträger angeordnet sind, sondern an einem in einer vertikalen Ebene verlaufenden umlaufenden Zugmittel.

Durch DE 33 39 045 A1 ist eine ähnliche Vorrichtung bekannt, mit dem Unterschied, dass die Greiferköpfe in horizontaler Richtung an einer Kette geführt umlaufend sind und vermittels entlang horizontal umlaufender Schienen geführter Schlitten abgesenkt und wieder angehoben sowie geschlossen und geöffnet werden.

Nachteilig an dieser Art von Vorrichtungen zum Umgang mit Artikeln ist deren großer Platzbedarf in Transportrichtung sowie die eingeschränkte Taktung, da nur eine Gruppe von Artikeln nach der anderen in jeweils einen Getränkekasten umgesetzt wird.

Durch DE 102 10 353 A1 ist eine Einrichtung zum Umsetzen von Artikeln bekannt, welche einen an einem sechsachsigen Roboterarm angeordneten Greiferkopf aus mehreren Greiftulpen aufweist, welche während des Umsetzens der Artikel innerhalb einer durch die Greiftulpen gebildeten Ebene einzeln oder gruppenweise in ihrer Position relativ zueinander beweglich angetrieben sind.

Auch mittels einer solchen Vorrichtung kann nur eine Umverpackung nach der anderen befüllt werden, wodurch die Taktung stark eingeschränkt ist.

Durch DE 10 2011 002 575 A1 ist eine Vorrichtung zum Umgang mit Artikeln bekannt, umfassend ein erstes Fördermittel zur Zufuhr von Artikeln, ein zweites Fördermittel zur Zufuhr von Umverpackungen, ein drittes Fördermittel zum Abtransport von Umverpackungen mit in diese eingesetzten Artikeln, und eine zwischen dem zweiten Fördermittel und dem dritten Fördermittel angeordnete Einsetzfläche, sowie eine Einrichtung zum Transfer zugeführter Umverpackungen von dem zweiten Fördermittel zur Einsetzfläche, eine Einrichtung zum Umsetzen von Artikeln von dem ersten Fördermittel in auf die Einsetzfläche transferierte Umverpackungen, und eine Einrichtung zum Transfer von Umverpackungen mit in diese eingesetzten Artikeln von der Einsetzfläche auf das dritte Fördermittel. Die Einrichtung zum Transfer von Umverpackungen von dem zweiten Fördermittel auf die Einsetzfläche umfasst eine Einrichtung zum Transfer von Umverpackungen mit in diese eingesetzten Artikeln von der Einsetzfläche auf das dritte Fördermittel oder ein oder mehrere Teile der Einrichtung zum Transfer von Umverpackungen mit in diese eingesetzten Artikeln von der Einsetzfläche auf das dritte Fördermittel, oder sie ist vollständig oder teilweise von der Einrichtung zum Transfer von Umverpackungen mit in diese eingesetzten Artikeln von der Einsetzfläche auf das dritte Fördermittel umfasst.

Durch WO 2013/010697 A1 ist eine Vorrichtung zum Umgang mit Artikeln bekannt, welche ein erstes Fördermittel zur Zufuhr von Artikeln, ein zweites Fördermittel zur Zufuhr von Umverpackungen, ein drittes Fördermittel zum Abtransport von Umverpackungen mit in diese eingesetzten Artikeln, und eine Einsetzfläche, sowie eine Einrichtung zum Transfer zugeführter Umverpackungen von dem zweiten Fördermittel zur Einsetzfläche, eine Einrichtung zum Umsetzen von Artikeln von dem ersten Fördermittel in auf die Einsetzfläche transferierte Umverpackungen, und eine Einrichtung zum Transfer von Umverpackungen mit in diese eingesetzten Artikeln von der Einsetzfläche auf das dritte Fördermittel umfasst. Die Einsetzfläche ist hierbei neben dem zweiten Fördermittel und dem in Verlängerung des zweiten Fördermittels angeordneten dritten Fördermittel vorgesehen. Die von der Einrichtung zum Transfer von Umverpackungen mit in diesen eingesetzten Artikeln praktizierte Richtung des Transfers von mit in diesen eingesetzten Artikeln von der Einsetzfläche zum dritten Fördermittel verläuft in horizontaler Richtung orthogonal zur Transportrichtung des dritten Fördermittels.

Durch US 5,797,249 sind unterschiedliche Niveaus der Fördermittel für Umverpackungen und für Artikel bekannt.

Durch EP 1 410 995 A1 ist das Einsetzen von Gefachen in Umverpackungen bekannt.

Eine Aufgabe der Erfindung ist, eine Vorrichtung und ein Verfahren zum Umgang mit Artikeln anzugeben, welche beim Versehen einzelner Artikel oder mehrerer, beispielsweise zu einer Artikelgruppe gruppierter und/oder zu einem Gebinde zusammengefasster Artikel mit einer Umverpackung eine höhere Taktung erlauben.

Die obige Aufgabe wird jeweils gelöst mit den Merkmalen der unabhängigen Ansprüche. Weitere vorteilhafte Ausgestaltungen werden durch die Unteransprüche beschrieben.

Ein erster Gegenstand der Erfindung betrifft demnach eine Vorrichtung zum Umgang mit Artikeln, umfassend ein erstes Fördermittel zur Zufuhr von Artikeln, ein zweites Fördermittel zur Zufuhr von Umverpackungen sowie ein drittes Fördermittel zum Abtransport von Umverpackungen mit in diese eingesetzten Artikeln.

Die Vorrichtung umfasst außerdem eine zwischen dem zweiten und dem dritten Fördermittel angeordnete Einsetzfläche, sowie eine Einrichtung zum Transfer zugeführter Umverpackungen von dem zweiten Fördermittel zur Einsetzfläche.

Die Vorrichtung umfasst darüber hinaus eine Einrichtung zum Umsetzen von Artikeln von dem ersten Fördermittel in auf die Einsetzfläche transferierte Umverpackungen.

Die Einrichtung zum Umsetzen von Artikeln erfasst zunächst vermittels des ersten Fördermittels bereitgestellte Artikel, setzt die erfassten Artikel anschließend von dem ersten Fördermittel zur Einsetzfläche um und setzt die von ihr erfassten und von dem ersten Fördermittel zur Einsetzfläche umgesetzten Artikel mit deren Umsetzen in die auf die Einsetzfläche transferierte Umverpackungen ein.

Die Vorrichtung umfasst ferner eine Einrichtung zum Transfer von Umverpackungen mit in diese eingesetzten Artikeln von der Einsetzfläche auf das dritte Fördermittel.

Die Einrichtung zum Transfer von Umverpackungen von dem zweiten Fördermittel auf die Einsetzfläche kann die Einrichtung zum Transfer von Umverpackungen mit in diese eingesetzten Artikeln von der Einsetzfläche auf das dritte Fördermittel oder eines oder mehrere Teile der Einrichtung zum Transfer von Umverpackungen mit in diese eingesetzten Artikeln von der Einsetzfläche auf das dritte Fördermittel umfassen oder vollständig oder teilweise von der Einrichtung zum Transfer von Umverpackungen mit in diese eingesetzten Artikeln von der Einsetzfläche auf das dritte Fördermittel umfasst sein.

Die Einrichtung zum Transfer zugeführter Umverpackungen von dem zweiten Fördermittel zur Einsetzfläche und die Einrichtung zum Transfer von Umverpackungen mit in diese eingesetzten Artikeln von der Einsetzfläche auf das dritte Fördermittel bilden somit jeweils für sich oder gemeinsam mindestens eine unabhängig von der Einrichtung zum Umsetzen von Artikeln von dem ersten Fördermittel in auf die Einsetzfläche transferierte Umverpackungen ausgebildete und betreibbare Transfereinrichtung.

Durch die Einsetzfläche in Verbindung mit der mindestens einen von der Einrichtung zum Umsetzen von Artikeln von dem ersten Fördermittel in auf die Einsetzfläche transferierte Umverpackungen unabhängigen Transfereinrichtung wird eine Leistungssteigerung hinsichtlich der erzielbaren Taktung ausgehend von einer Vorrichtung ohne Einsetzfläche erhalten. Die höhere Taktung wird erzielt, da durch die Einsetzfläche in Verbindung mit der mindestens einen von der Einrichtung zum Umsetzen von Artikeln unabhängigen Transfereinrichtung in einem ersten Takt vermittels des ersten Fördermittels zugeführte Artikel von der Einrichtung zum Umsetzen von Artikeln erfasst werden können und die Einrichtung zum Umsetzen von Artikeln mit dem Umsetzen der erfassten Artikel durch Start einer Bewegung der erfassten Artikel von dem ersten Fördermittel zur Einsetzfläche beginnen kann, während gleichzeitig noch leere Umverpackungen von dem zweiten Fördermittel zur Einsetzfläche abgeschoben und Umverpackungen mit in diese eingesetzten Artikeln von der Einsetzfläche auf das dritte Fördermittel übergeschoben werden, und in einem zweiten Takt neue, leere Umverpackungen vermittels des zweiten Fördermittels zugeführt und gleichzeitig Umverpackungen mit in diese eingesetzten Artikeln von dem dritten Fördermittel abtransportiert werden können, während gleichzeitig das Umsetzen von im ersten Takt erfassten Artikeln abgeschlossen wird, indem Artikel in die auf der Einsetzfläche bereitstehende Umverpackungen eingesetzt werden.

Hierbei wird das Umsetzen der im ersten Takt erfassten Artikel beendet, indem von der Einrichtung zum Umsetzen von Artikeln erfasste Artikel in die im ersten Takt auf die Einsetzfläche abgeschobene leere Umverpackungen eingesetzt werden, und mit einer Rückführung der Einrichtung zum Umsetzen von Artikeln von der Einsetzfläche zum ersten Fördermittel zumindest begonnen wird, um erneut vom ersten Fördermittel zugeführte Artikel zu erfassen und umzusetzen.

Vorzugsweise sind das erste Fördermittel, das zweite Fördermittel und das dritte Fördermittel zumindest im Bereich ihrer an die Einsetzfläche angrenzenden Partien entlang der Einsetzfläche parallel zueinander angeordnet. Bei der Anordnung parallel zueinander verlaufen die Transportrichtungen der Fördermittel zumindest im Bereich ihrer an die Einsetzfläche angrenzenden Partien parallel zueinander. Dies gilt sowohl für in die selbe Richtung verlaufende Transportrichtungen aller Fördermittel, als auch für in entgegengesetzte Richtungen verlaufende Transportrichtungen zumindest zweier Fördermittel.

Bevorzugt überlappen die parallel zueinander angeordneten Partien der Fördermittel einander um die Länge wenigstens zweier Umverpackungen. Hierdurch können gleichzeitig zwei oder mehr Umverpackungen auf der Einsetzfläche bereit gestellt werden und gleichzeitig Artikel in die mehreren bereitgestellten Umverpackungen eingesetzt werden. Hierdurch kann die Taktung nochmals erhöht werden.

Die von der Einrichtung zum Transfer von leeren Umverpackungen praktizierte, kurz als Transferrichtung bezeichnete Richtung des Transfers von Umverpackungen vom zweiten Fördermittel zur Einsetzfläche verläuft in horizontaler Richtung vorzugsweise quer, bevorzugt orthogonal zur Transportrichtung des zweiten Fördermittels.

Die von der Einrichtung zum Transfer von Umverpackungen mit in diesen eingesetzten Artikeln praktizierte, kurz als Transferrichtung bezeichnete Richtung des Transfers von Umverpackungen mit in diesen eingesetzten Artikeln von der Einsetzfläche zum dritten Fördermittel verläuft in horizontaler Richtung vorzugsweise quer, bevorzugt orthogonal zur Transportrichtung des dritten Fördermittels.

Damit verläuft bevorzugt die Transferrichtung von der oder den Einrichtungen zum Transfer vorzugsweise sowohl von leeren Umverpackungen, als auch von Umverpackungen mit in diesen eingesetzten Artikeln beim Transfer vom zweiten Fördermittel zur Einsetzfläche und von der Einsetzfläche zum dritten Fördermittel in horizontaler Richtung vorzugsweise quer, bevorzugt orthogonal zu den Transportrichtungen sowohl des zweiten Fördermittels, als auch des dritten Fördermittels.

Durch die in Bezug auf die Transportrichtungen des zweiten und des dritten Fördermittels quer und bevorzugt orthogonale horizontale Transferrichtung können jeweils gleichzeitig mehrere leere Umverpackungen sowie mehrere Umverpackungen mit in diesen eingesetzten Artikeln von dem zweiten Fördermittel zur Einsetzfläche sowie von der Einsetzfläche zum dritten Fördermittel transferiert werden, wodurch zeitgleich Artikel in mehrere auf der Einsetzfläche abgestellte Umverpackungen eingesetzt werden können. Hierdurch wird die Taktung maßgeblich erhöht.

Die Einrichtung zum Transfer von Umverpackungen von dem zweiten Fördermittel auf die Einsetzfläche und/oder die Einrichtung zum Transfer von Umverpackungen mit in diese eingesetzten Artikeln von der Einsetzfläche auf das dritte Fördermittel kann mindestens einen Schieber umfassen.

Das zweite und das dritte Fördermittel sowie die Einsetzfläche liegen bevorzugt auf einem gemeinsamen, ersten Niveau, wohingegen das erste Fördermittel auf einem vorzugsweise höheren, zweiten Niveau liegt. Hierdurch kann ein zum Einsetzen von Artikeln in Umverpackungen notwendiger Vertikalhub der Einrichtung zum Umsetzen von Artikeln auf das Wesentliche reduziert werden, wodurch die Taktung nochmals gesteigert werden kann.

Vorzugsweise liegt das zweite Niveau zumindest um die Höhe einer gegebenenfalls zunächst offenen und nach dem Einsetzen von Artikeln zu schließenden Umverpackung oberhalb des ersten Niveaus. Stehen von einer als verschließbare Kartonage ausgeführten Umverpackung zu verschließende Laschen nach oben ab, so liegt das zweite Niveau bevorzugt um die in unverschlossenem Zustand aufstehende Höhe der Laschen entsprechend höher oberhalb des ersten Niveaus, als wenn die Umverpackung beispielsweise durch einen separat bereitgestellten Deckel verschlossen wird.

Das Verschließen der Umverpackungen mit in diese eingesetzten Artikeln kann noch auf der Einsetzfläche, beispielsweise mit oder im Anschluss an das Einsetzen der Artikel erfolgen, oder in einem separaten Behandlungsschritt beispielsweise im Anschluss oder im weiteren Verlauf des dritten Fördermittels der Vorrichtung zum Umgang mit Artikeln erfolgen. Beispielsweise können die Umverpackungen mit in diese eingesetzten Artikeln im weiteren Verlauf des dritten Fördermittels mit Deckeln verschlossen werden.

Vor dem Einsetzen der Artikel in auf die Einsetzfläche transferierte Umverpackungen werden auch als so genannte Baskets bezeichnete Gefache in die Umverpackungen eingesetzt, welche den Artikeln innerhalb der Umverpackungen feste Plätze zuweisen und diese dadurch beim Weitertransport der Umverpackungen mit in diese eingesetzten Artikeln bis zur Entnahme der Artikel und deren Verbrauch vor einem Gegeneinanderstoßen und Aneinanderreiben schützen, was ansonsten beispielsweise durch Abwetzungsspuren, etwa von auf den Artikeln beispielsweise in Form von Etiketten aufgebrachten Informationen, und/oder Beschädigungen der Artikel untereinander einen negativen Qualitätseindruck zur Folge haben kann.

Die Gefache können bereits vor dem Transfer der Umverpackungen zur Einsetzfläche in die Umverpackungen eingesetzt sein oder werden, oder die Gefache können noch vor den Artikeln oder gemeinsam mit diesen oder nach dem Einsetzen der Artikel in die Umverpackungen eingebracht werden. Das nachträgliche Einbringen von Gefachen, insbesondere mit leichten, innerhalb der Umverpackungen mit geringem Kraftaufwand verschiebbaren Artikeln, weist den Vorteil einer einfacheren Platzierung der Artikel in den Umverpackungen einhergehend mit einem verringerten Steuerungsaufwand auf, da beispielsweise Artikel mit auf deren Aufstandsflächen gegenüberliegend konischem oder ähnlichem Verlauf, wie etwa Getränkeflaschen mit einem sich von oben nach unten zumindest abschnittsweise weitenden Flaschenhals, mit dem Einsetzen der Gefache durch diese innerhalb der Umverpackungen horizontal verschoben werden können.

Die Gefache können beispielsweise noch auf dem zweiten Fördermittel in die Umverpackungen eingebracht werden, oder bereits beispielsweise mit oder im Anschluss an ein Aufrichten der Umverpackungen in diese eingebracht werden oder bereits in einer entsprechenden Kartonage mit eingearbeitet sein, wobei sich die Gefache mit dem Aufrichten der Kartonage innerhalb der Umverpackung entfalten können.

In Verbindung mit dem Einbringen von Gefachen vor oder nach dem Einsetzen von Artikeln in die Umverpackungen ist eine separate Einbringungsfläche zwischen zweitem Fördermittel und der Einsetzfläche im Falle der Einbringung vor dem Einsetzen der Artikel, oder zwischen der Einsetzfläche und drittem Fördermittel im Falle der Einbringung nach dem Einsetzen der Artikel vorgesehen. Dementsprechend kann eine zusätzliche Einrichtung zum Transfer vorgesehen sein, die ebenfalls Teil einer Transfereinrichtung oder von dieser umfasst sein kann.

Im weiteren Verlauf des dritten Fördermittels der Vorrichtung zum Umgang mit Artikeln kann ein Stapelplatz vorgesehen sein, an dem beispielsweise verschlossene Umverpackungen mit in diese eingesetzten Artikeln zu Stapellagen gruppiert zu einem Stapel aufgestapelt werden, der dann nach Erreichen einer vorgegebenen Stapelhöhe, entsprechend einer vorgegebenen Anzahl von am Stapelplatz übereinander gestapelten Stapellagen abtransportiert wird, um Platz zum Aufstapeln eines neuen Stapels zu schaffen.

Die vermittels des ersten Fördermittels zugeführten Artikel sind bevorzugt bereits beispielsweise zu in jeweils eine Umverpackung einzusetzenden Artikelgruppen geordnet. Die vermittels des ersten Fördermittels zugeführten Artikel können aneinander anstehen oder lückenhaft hintereinander gereiht zugeführt werden. Die vermittels des ersten Fördermittels zugeführten Artikel können in einer oder in mehreren parallel verlaufenden Reihen zugeführt werden. Hierzu können die Artikel über einen geeigneten Zulauf an das erste Fördermittel übergeben werden und nach der Übergabe an das erste Fördermittel in einer oder in mehreren parallel zueinander orientierten Gassen geführt sein.

Die vermittels des ersten Fördermittels zugeführten Artikel bilden demnach einen ein- oder mehrreihigen Artikelstrom aus geschlossen und/oder lückenhaft hintereinander gereihten Artikeln.

Die Artikel können entlang eines Zulaufs zum ersten Fördermittel zuvor behandelt worden sein, beispielsweise durch Herstellung eines Behälters und/oder Reinigung einer Außen und/oder Innenfläche und/oder Kühlung und/oder Befüllung und/oder Verschließen, um ohne Anspruch auf Vollständigkeit der Aufzählung nur einige Beispiele zur Behandlung von Artikeln zu nennen, und/oder mit den Artikeln kann entlang eines Zulaufs zum ersten Fördermittel zuvor umgegangen worden sein, beispielsweise durch Abtrennung einer Anzahl von Artikeln von einem oder mehreren Artikelströmen aus unmittelbar hintereinander folgend transportierten Artikeln und/oder Gruppierung einer Anzahl von Artikeln zu Artikelgruppen und/oder Zusammenstellung und Zusammenfassung einer Anzahl von Artikeln zu Gebinden, um ohne Anspruch auf Vollständigkeit der Aufzählung nur einige Beispiele zum Umgang mit Artikeln zu nennen, bevor sie anschließend vermittels der Vorrichtung zum Umgang mit Artikeln in die Umverpackungen eingesetzt werden.

Die Fördermittel umfassen bevorzugt mindestens eine Horizontalfördereinrichtung, wie beispielsweise einen Bandförderer und/oder einen Rollenförderer.

Bei den Umverpackungen handelt es sich bevorzugt um Kartonagen beispielsweise in Form von Kartonschachteln mit oder ohne darin angeordnete oder anordbare, einzelne Artikel voneinander trennende und/oder fern haltende Gefachungen.

Ein zweiter Gegenstand der Erfindung betrifft ein Verfahren zum Umgang mit Artikeln, welches vorsieht, in einem oder in mehreren Artikelströmen aus geschlossen und/oder lückenhaft hintereinander gereiht und/oder gruppiert zugeführte Artikel in auf einer Einsetzfläche bereitstehende Umverpackungen einzusetzen, welche wiederum selbst unabhängig von den Artikeln in einer Transportrichtung zugeführt und einzeln oder gruppenweise quer zu der Transportrichtung auf die Einsetzfläche transferiert und von dort aus nach dem Einsetzen von Artikeln wiederum einzeln oder gruppenweise quer zu der Transportrichtung - nunmehr mit in sie eingesetzten Artikeln versehen - transferiert werden, um anschließend unabhängig von der Zufuhr von Artikeln, unabhängig von der Zufuhr von Umverpackungen und unabhängig vom Einsetzen von Artikeln in die Umverpackungen in Richtung der Transportrichtung oder entgegengesetzt zu dieser parallel zur Transportrichtung abtransportiert zu werden.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor in Verbindung mit dem Verfahren beschriebene Merkmale aufweisen, ebenso wie das Verfahren alternativ oder zusätzlich einzelne oder eine Kombination mehrerer zuvor in Verbindung mit der Vorrichtung beschriebene Merkmale aufweisen kann.

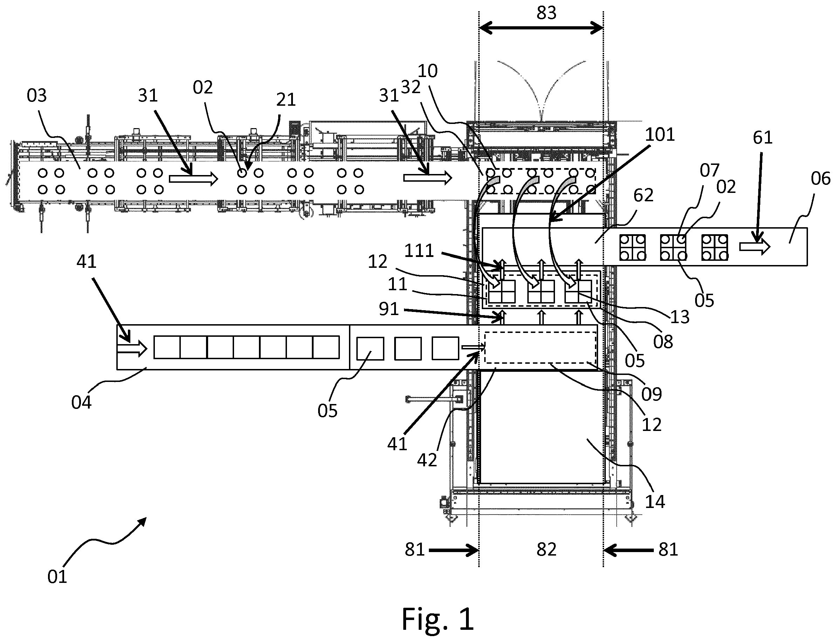

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Die einzige Fig. 1 zeigt in schematischer Darstellung:
eine erfindungsgemäße Vorrichtung zum Umgang mit Artikeln in einer Draufsicht.

Eine in Fig. 1 ganz oder in Teilen dargestellte Vorrichtung 01 zum Umgang mit Artikeln 02 umfasst:
- ein erstes Fördermittel 03 zur Zufuhr von Artikeln 02,
- ein zweites Fördermittel 04 zur Zufuhr von Umverpackungen 05,
- ein drittes Fördermittel 06 zum Abtransport von kurz als Umverpackstücke 07 bezeichneten Umverpackungen 05 mit in diese eingesetzten Artikeln 02, und
- eine zwischen dem zweiten Fördermittel 04 und dem dritten Fördermittel 06 angeordnete Einsetzfläche 08, sowie
- eine gestrichelt dargestellte Einrichtung 09 zum durch Pfeile 91 angedeuteten Transfer zugeführter Umverpackungen 05 von dem zweiten Fördermittel 04 zur Einsetzfläche 08,
- eine gestrichelt dargestellte Einrichtung 10 zum durch Pfeile 101 angedeuteten Umsetzen von Artikeln 02 von dem ersten Fördermittel 03 in auf die Einsetzfläche 08 transferierte Umverpackungen 05, und
- eine gestrichelt dargestellte Einrichtung 11 zum durch Pfeile 111 angedeuteten Transfer von kurz als Umverpackstücke 07 bezeichneten Umverpackungen 05 mit in diese eingesetzten Artikeln 02 von der Einsetzfläche 08 auf das dritte Fördermittel 06.

Die Einrichtung 10 zum durch Pfeile 101 angedeuteten Umsetzen von Artikeln 02 erfasst zunächst vermittels des ersten Fördermittels 03 bereitgestellte Artikel 02, setzt die erfassten Artikel 02 anschließend von dem ersten Fördermittel 03 zur Einsetzfläche 08 um und setzt dabei die von ihr erfassten und von dem ersten Fördermittel 03 zur Einsetzfläche 08 umgesetzten Artikel 02 in die auf die Einsetzfläche 08 transferierten Umverpackungen 05 ein.

Die Vorrichtung 01 erlaubt die Durchführung eines Verfahrens zum Umgang mit Artikeln 02, welches vorsieht, in einem oder in mehreren Artikelströmen aus geschlossen und/oder lückenhaft hintereinander gereiht und/oder gruppiert zugeführte Artikel 02 in auf einer Einsetzfläche 08 bereitstehende Umverpackungen 05 einzusetzen, welche wiederum selbst unabhängig von den Artikeln 02 in einer durch Pfeile 41 angedeuteten Transportrichtung zugeführt und einzeln oder gruppenweise durch Pfeile 91 dargestellt quer zu der durch Pfeile 41 angedeuteten Transportrichtung auf die Einsetzfläche 08 transferiert und von dort aus nach dem Einsetzen von Artikeln 02 wiederum einzeln oder gruppenweise durch Pfeile 111 dargestellt quer zu der durch Pfeile 41 angedeuteten Transportrichtung - nunmehr mit in sie eingesetzten Artikeln 02 versehen - transferiert werden, um anschließend unabhängig von der durch Pfeile 31 angedeuteten Zufuhr von Artikeln 02, unabhängig von der durch Pfeile 41 angedeuteten Zufuhr von Umverpackungen 05 und unabhängig vom durch Pfeile 101 angedeuteten Einsetzen von Artikeln 02 in die Umverpackungen 05 in Richtung der durch Pfeile 41 angedeuteten Transportrichtung oder entgegengesetzt zu dieser parallel zur durch Pfeile 41 angedeuteten Transportrichtung abtransportiert zu werden.

Sowohl die Vorrichtung 01, als auch das Verfahren können wie nachfolgend ausgeführt weitergebildet sein.

Die Einrichtung 09 zum durch Pfeile 91 angedeuteten Transfer von Umverpackungen 05 von dem zweiten Fördermittel 04 auf die Einsetzfläche 08 kann die Einrichtung 11 zum durch Pfeile 111 angedeuteten Transfer von kurz als Umverpackstücke 07 bezeichneten Umverpackungen 05 mit in diese eingesetzten Artikeln 02 von der Einsetzfläche 08 auf das dritte Fördermittel 06 oder eines oder mehrere Teile der Einrichtung 11 zum durch Pfeile 111 angedeuteten Transfer von kurz als Umverpackstücke 07 bezeichneten Umverpackungen 05 mit in diese eingesetzten Artikeln 02 von der Einsetzfläche 08 auf das dritte Fördermittel 06 umfassen.

Alternativ kann die Einrichtung 09 zum durch Pfeile 91 angedeuteten Transfer von Umverpackungen 05 von dem zweiten Fördermittel 04 auf die Einsetzfläche 08 vollständig oder teilweise von der Einrichtung 11 zum durch Pfeile 111 angedeuteten Transfer von kurz als Umverpackstücke 07 bezeichneten Umverpackungen 05 mit in diese eingesetzten Artikeln 02 von der Einsetzfläche 08 auf das dritte Fördermittel 06 umfasst sein.

Die Einrichtung 09 zum Transfer zugeführter Umverpackungen 05 von dem zweiten Fördermittel 04 zur Einsetzfläche 08 und die Einrichtung 11 zum Transfer von Umverpackstücken 07 von der Einsetzfläche 08 auf das dritte Fördermittel 06 bilden somit jeweils für sich oder gemeinsam mindestens eine unabhängig von der Einrichtung 10 zum Umsetzen von Artikeln 02 von dem ersten Fördermittel 03 in auf die Einsetzfläche 08 transferierte Umverpackungen 05 ausgebildete und betreibbare Transfereinrichtung 12.

Durch die Einsetzfläche 08 in Verbindung mit der mindestens einen von der Einrichtung 10 zum Umsetzen von Artikeln 02 von dem ersten Fördermittel 03 in auf die Einsetzfläche 08 transferierte Umverpackungen 05 unabhängigen Transfereinrichtung 12 wird eine Leistungssteigerung hinsichtlich der erzielbaren Taktung ausgehend von einer Vorrichtung ohne Einsetzfläche 08 erhalten. Die höhere Taktung wird erzielt, da durch die Einsetzfläche 08 in Verbindung mit der mindestens einen von der Einrichtung 10 zum Umsetzen von Artikeln 02 unabhängigen Transfereinrichtung 12 in einem ersten Takt vermittels des ersten Fördermittels 03 zugeführte Artikel 02 von der Einrichtung 10 zum Umsetzen von Artikeln 02 erfasst werden können und die Einrichtung 10 zum Umsetzen von Artikeln 02 mit dem Umsetzen der erfassten Artikel 02 durch Start einer Bewegung der erfassten Artikel 02 von dem ersten Fördermittel 03 zur Einsetzfläche 08 beginnen kann, während gleichzeitig noch leere Umverpackungen 05 von dem zweiten Fördermittel 04 zur Einsetzfläche 08 beispielsweise durch Ab- oder Überschieben transferiert und Umverpackstücke 07 von der Einsetzfläche 08 auf das dritte Fördermittel 06 durch Ab-oder Überschieben transferiert werden, und in einem zweiten Takt neue, leere Umverpackungen 05 vermittels des zweiten Fördermittels 04 zugeführt und gleichzeitig Umverpackstücke 07 von dem dritten Fördermittel 06 abtransportiert werden können, während gleichzeitig das Umsetzen von im ersten Takt erfassten Artikeln 02 abgeschlossen wird, indem Artikel 02 vermittels der Einrichtung 10 zum Umsetzen von Artikeln 02 in die auf der Einsetzfläche 08 bereitstehende Umverpackungen 05 eingesetzt werden.

Hierbei wird das Umsetzen der im ersten Takt erfassten Artikel 02 beendet, indem von der Einrichtung 10 zum Umsetzen von Artikeln 02 erfasste Artikel 02 in die im ersten Takt auf die Einsetzfläche 08 durch Ab- oder Überschieben transferierte, leere Umverpackungen 05 eingesetzt werden, und mit einer Rückführung der Einrichtung 10 zum Umsetzen von Artikeln 02 von der Einsetzfläche 08 zum ersten Fördermittel 03 zumindest begonnen wird, um erneut vom ersten Fördermittel 03 zugeführte Artikel 02 zu erfassen und in einer Wiederholung des ersten Takts umzusetzen.

Der durch Pfeile 91 angedeutete Transfer zugeführter Umverpackungen 05 von dem zweiten Fördermittel 04 zur Einsetzfläche 08 kann durch Überschieben erfolgen.

Das durch Pfeile 101 angedeutete Umsetzen kann durch Greifen der Artikel 02, über den Rand des ersten Fördermittels 03 Schieben oder leichtes vom ersten Fördermittel 03 Anheben, sowie Absenken der gegriffenen Artikel in auf der Einsetzfläche 08 bereitstehende Umverpackungen 05 erfolgen.

Der durch Pfeile 111 angedeutete Transfer von Umverpackstücken 07 von der Einsetzfläche 08 zum dritten Fördermittel 06 kann durch Überschieben erfolgen.

Bevorzugt sind zumindest das zweite Fördermittel 04 und das dritte Fördermittel 06 wenigstens im Bereich ihrer an die Einsetzfläche 08 angrenzenden Partien 32, 42, 62 entlang der Einsetzfläche 08 parallel zueinander angeordnet oder verlaufen das zweite Fördermittel 04 und das dritte Fördermittel 06 wenigstens im Bereich ihrer an die Einsetzfläche 08 angrenzenden Partien 32, 42, 62 mit anderen Worten parallel zueinander.

Außerdem kann das erste Fördermittel 03 parallel zum zweiten Fördermittel 04 und parallel zum dritten Fördermittel 06 verlaufen.

Bei der Anordnung parallel zueinander verlaufen die durch Pfeile 31,41, 61 angedeuteten Transportrichtungen der Fördermittel 03, 04, 06 zumindest im zwischen den Pfeilen 81 liegenden Bereich 82 ihrer an die Einsetzfläche 08 angrenzenden beziehungsweise im Bereich der Einsetzfläche 08 einander überlappenden Partien 32, 42, 62 parallel zueinander. Dies gilt sowohl für in die selbe Richtung verlaufende Transportrichtungen aller Fördermittel 03, 04, 06, als auch für in entgegengesetzte Richtungen verlaufende Transportrichtungen zumindest zweier Fördermittel 03, 04, 06.

Die parallel zueinander angeordneten Partien 32, 42, 62 der Fördermittel 03, 04, 06 können einander um eine durch den Doppelpfeil 83 angedeutete Strecke der Länge von wenigstens zwei, vorzugsweise mindestens drei auf der Einsetzfläche 08 bereitstehenden Umverpackungen 05 überlappen.

Hierdurch können gleichzeitig zwei oder mehr Umverpackungen 05 vom zweiten Fördermittel 04 auf die Einsetzfläche 08 sowie zwei oder mehr Umverpackstücken 07 von der Einsetzfläche 08 auf das dritte Fördermittel 06 transferiert werden und ebenso gleichzeitig Artikel 02 in die mehreren, dadurch auf der Einsetzfläche 08 bereitgestellten Umverpackungen 05 eingesetzt werden. Hierdurch kann die Taktung nochmals erhöht werden.

Die von der Einrichtung 09 zum Transfer von leeren Umverpackungen 05 praktizierte, kurz als Transferrichtung bezeichnete und durch Pfeile 91 angedeutete Richtung des Transfers von Umverpackungen 05 vom zweiten Fördermittel 04 zur Einsetzfläche 08 in horizontaler Richtung verläuft vorzugsweise quer, bevorzugt orthogonal zur durch Pfeile 41 angedeuteten Transportrichtung des zweiten Fördermittels 04.

Die von der Einrichtung 11 zum Transfer von kurz als Umverpackstücke 07 bezeichneten Umverpackungen 05 mit in diesen eingesetzten Artikeln 02 praktizierte, kurz als Transferrichtung bezeichnete und durch Pfeile 111 angedeutete Richtung des Transfers von Umverpackstücken 07 von der Einsetzfläche 08 zum dritten Fördermittel 06 verläuft in horizontaler Richtung vorzugsweise quer, bevorzugt orthogonal zur durch den Pfeil 61 angedeuteten Transportrichtung des dritten Fördermittels 06.

Damit verläuft bevorzugt die durch Pfeile 91 und durch Pfeile 111 angedeutete Transferrichtung von der oder den Einrichtungen 09, 11 zum Transfer vorzugsweise sowohl von leeren Umverpackungen 05, als auch von als Umverpackungsstücken 07 bezeichneten Umverpackungen 05 mit in diesen eingesetzten Artikeln 02 beim Transfer vom zweiten Fördermittel 04 zur Einsetzfläche 08 und beim Transfer von der Einsetzfläche 08 zum dritten Fördermittel 06 in horizontaler Richtung vorzugsweise quer, bevorzugt orthogonal zu den durch Pfeile 41 und 61 angedeuteten Transportrichtungen sowohl des zweiten Fördermittels 04, als auch des dritten Fördermittels 06.

Durch die in Bezug auf die durch Pfeile 41 und 61 angedeuteten Transportrichtungen des zweiten Fördermittels 04 und des dritten Fördermittels 06 quer und bevorzugt orthogonale horizontale, durch Pfeile 91 und durch Pfeile 111 angedeutete Transferrichtung können jeweils gleichzeitig eine oder mehrere leere Umverpackungen 05 sowie eine oder mehrere auch als Umverpackungsstücke 07 bezeichnete Umverpackungen 05 mit in diesen eingesetzten Artikeln 02 von dem zweiten Fördermittel 41 zur Einsetzfläche 08 sowie von der Einsetzfläche 08 zum dritten Fördermittel 06 transferiert werden, wodurch zeitgleich Artikel 02 in mehrere auf der Einsetzfläche 08 abgestellte Umverpackungen 05 eingesetzt werden können. Hierdurch wird die Taktung maßgeblich erhöht.

Beispielsweise kann die Einrichtung 09 zum Transfer von Umverpackungen 05 von dem zweiten Fördermittel 04 auf die Einsetzfläche 08 und/oder die Einrichtung 11 zum Transfer von auch als Umverpackungsstücke 07 bezeichneten Umverpackungen 05 mit in diesen eingesetzten Artikeln 02 von der Einsetzfläche 08 auf das dritte Fördermittel 06 mindestens einen Schieber umfassen.

Das zweite Fördermittel 04 und das dritte Fördermittel 06 sowie die Einsetzfläche 08 liegen bevorzugt auf einem gemeinsamen, ersten Niveau.

Das erste Fördermittel 03 liegt vorzugsweise auf einem höheren, zweiten Niveau.

Hierdurch kann ein zum Einsetzen von Artikeln 02 in Umverpackungen 05 notwendiger Vertikalhub der Einrichtung 10 zum Umsetzen von Artikeln 02 auf das Wesentliche reduziert werden, wodurch die Taktung nochmals gesteigert werden kann.

Das zweite Niveau kann zumindest um die Höhe einer gegebenenfalls zunächst offenen und nach dem Einsetzen von Artikeln 02 zu schließenden Umverpackung 05 oberhalb des ersten Niveaus liegen.

Stehen von einer als verschließbare Kartonage ausgeführten Umverpackung 05 zu verschließende Laschen nach oben ab, so liegt das zweite Niveau bevorzugt um die in unverschlossenem Zustand aufstehende Höhe der Laschen entsprechend höher oberhalb des ersten Niveaus, als wenn die Umverpackungen 05 beispielsweise durch einen separat bereitgestellten Deckel verschlossen werden.

Das Verschließen der auch als Umverpackungsstücke 07 bezeichneten Umverpackungen 05 mit in diesen eingesetzten Artikeln 02 kann noch auf der Einsetzfläche 08, beispielsweise mit oder im Anschluss an das Einsetzen der Artikel 02 in die Umverpackungen 05, oder in einem separaten Behandlungsschritt beispielsweise im Anschluss oder im weiteren Verlauf des dritten Fördermittels 06 der Vorrichtung 01 zum Umgang mit Artikeln 02 erfolgen.

Beispielsweise können die auch als Umverpackungsstücke 07 bezeichneten Umverpackungen 05 mit in diese eingesetzten Artikeln 02 im weiteren Verlauf des dritten Fördermittels 06 mit Deckeln verschlossen werden.

Vor oder nach dem Einsetzen der Artikel 02 in auf die Einsetzfläche 08 transferierte Umverpackungen 08 können auch als so genannte Baskets bezeichnete Gefache 13 in die Umverpackungen 05 eingesetzt werden, welche den Artikeln 02 innerhalb der Umverpackungen 05 feste Plätze zuweisen und diese dadurch beim Weitertransport der Umverpackungen 05 mit in diese eingesetzten Artikeln 02 bis zur Entnahme der Artikel 02 und deren Verbrauch vor einem Gegeneinanderstoßen und Aneinanderreiben schützen, was ansonsten beispielsweise durch Abwetzungsspuren, etwa von auf den Artikeln 02 beispielsweise in Form von Etiketten aufgebrachten Informationen, und/oder Beschädigungen der Artikel 02 untereinander einen negativen Qualitätseindruck zur Folge haben kann.

Die Gefache 13 können bereits vor dem Transfer der Umverpackungen 05 zur Einsetzfläche 08 in die Umverpackungen 05 eingesetzt sein oder werden, oder die Gefache 13 können noch vor den Artikeln 02 oder gemeinsam mit diesen oder nach dem Einsetzen der Artikel 02 in die Umverpackungen 05 eingebracht werden.

Die Gefache 13 können beispielsweise durch eine gesonderte Einrichtung 14 bereitgestellt werden, welche die Gefache 13 beispielsweise gleichzeitig aufrichten kann.

Das nachträgliche Einbringen von Gefachen 13, insbesondere mit leichten, innerhalb der Umverpackungen 05 mit geringem Kraftaufwand verschiebbaren Artikeln 02, weist den Vorteil einer vereinfachten Platzierung der Artikel 02 in den Umverpackungen 05 einhergehend mit einem verringerten Steuerungsaufwand für die Einrichtung 10 zum Umsetzen der Artikel 02 auf, da beispielsweise Artikel 02 mit auf deren Aufstandsflächen gegenüberliegend konischem oder ähnlichem Verlauf, wie etwa Getränkeflaschen mit einem sich von oben nach unten zumindest abschnittsweise weitenden Flaschenhals, mit dem Einsetzen der Gefache 13 durch diese innerhalb der Umverpackungen 05 horizontal verschoben werden können.

Die Gefache 13 können beispielsweise noch auf dem zweiten Fördermittel 04 in die Umverpackungen 05 eingebracht werden, oder bereits beispielsweise mit oder im Anschluss an ein Aufrichten der Umverpackungen 05 in diese eingebracht werden oder bereits in einer entsprechenden Kartonage mit eingearbeitet sein, wobei sich die Gefache 13 mit dem Aufrichten der Kartonage innerhalb der Umverpackung 05 entfalten können.

In Verbindung mit dem Einbringen von Gefachen 13 vor oder nach dem Einsetzen von Artikeln 02 in die Umverpackungen 05 kann alternativ eine separate Einbringungsfläche zwischen zweitem Fördermittel 04 und der Einsetzfläche 08 im Falle der Einbringung von Gefachen 13 vor dem Einsetzen der Artikel 02, oder zwischen der Einsetzfläche 08 und drittem Fördermittel 06 im Falle der Einbringung von Gefachen 13 nach dem Einsetzen der Artikel 02 vorgesehen sein.

Dabei kann eine zusätzliche Einrichtung zum Transfer von mit Gefachen 13 versehenen Umverpackungen 05 von einer solchen Einbringungsfläche zur Einsetzfläche 08 oder von der Einsetzfläche 08 zur Einbringungsfläche vorgesehen sein, die ebenfalls Teil einer Transfereinrichtung 12 oder von dieser umfasst sein kann.

Im weiteren Verlauf des dritten Fördermittels 06 der Vorrichtung 01 zum Umgang mit Artikeln 02 kann ein Stapelplatz vorgesehen sein, an dem beispielsweise als verschlossene Umverpackungen 02 mit in diese eingesetzten Artikeln 02 ausgeführte Umverpackungsstücke 07 zu Stapellagen gruppiert zu einem Stapel aufgestapelt werden, der dann nach Erreichen einer vorgegebenen Stapelhöhe, entsprechend einer vorgegebenen Anzahl von am Stapelplatz übereinander gestapelten Stapellagen abtransportiert wird, um Platz zum Aufstapeln eines neuen Stapels zu schaffen.

Die vermittels des ersten Fördermittels 03 zugeführten Artikel 02 sind bevorzugt bereits beispielsweise zu in jeweils eine Umverpackung 05 einzusetzenden Artikelgruppen 21 geordnet. Die vermittels des ersten Fördermittels 03 zugeführten Artikel 02 können aneinander anstehen oder lückenhaft hintereinander gereiht zugeführt werden. Die vermittels des ersten Fördermittels 03 zugeführten Artikel 02 können in einer oder in mehreren parallel verlaufenden Reihen zugeführt werden. Hierzu können die Artikel 02 über einen geeigneten Zulauf an das erste Fördermittel 03 übergeben werden und nach der Übergabe an das erste Fördermittel 03 in einer oder in mehreren parallel zueinander orientierten Gassen geführt sein.

Die vermittels des ersten Fördermittels 03 zugeführten Artikel 02 bilden demnach einen ein- oder mehrreihigen Artikelstrom aus geschlossen und/oder lückenhaft hintereinander gereihten Artikeln 02.

Die Artikel 02 können entlang eines Zulaufs zum ersten Fördermittel 03 zuvor behandelt worden sein, beispielsweise durch Herstellung eines Behälters und/oder Reinigung einer Außen und/oder Innenfläche und/oder Kühlung und/oder Befüllung und/oder Verschließen, um ohne Anspruch auf Vollständigkeit der Aufzählung nur einige Beispiele zur Behandlung von Artikeln 02 zu nennen, und/oder mit den Artikeln 02 kann entlang eines Zulaufs zum ersten Fördermittel 03 zuvor umgegangen worden sein, beispielsweise durch Abtrennung einer Anzahl von Artikeln 02 von einem oder mehreren Artikelströmen aus unmittelbar hintereinander folgend transportierten Artikeln 02 und/oder Gruppierung einer Anzahl von Artikeln 02 zu Artikelgruppen 21 und/oder Zusammenstellung und Zusammenfassung einer Anzahl von Artikeln 02 zu Gebinden, um ohne Anspruch auf Vollständigkeit der Aufzählung nur einige Beispiele zum Umgang mit Artikeln 02 zu nennen, bevor sie anschließend vermittels der Vorrichtung 01 zum Umgang mit Artikeln 02 in die Umverpackungen 05 eingesetzt werden.

Die Fördermittel 03, 04, 06 umfassen bevorzugt mindestens eine Horizontalfördereinrichtung, wie beispielsweise einen Bandförderer und/oder einen Rollenförderer.

Bei den Umverpackungen 05 handelt es sich bevorzugt um Kartonagen beispielsweise in Form von Kartonschachteln mit oder ohne darin angeordnete oder anordbare, einzelne Artikel 02 voneinander trennende und/oder fern haltende Gefachungen 13.

Es ist ersichtlich, dass die Erfindung verwirklicht sein kann durch eine Vorrichtung 01 zum Umgang mit Artikeln 02 mit:
- einem ersten, Artikel 02 in einer ersten durch Pfeile 31 angedeuteten Transportrichtung zuführenden Fördermittel 03,
- einem zweiten, Umverpackungen 05 in einer bevorzugt parallel zur ersten, durch Pfeile 31 angedeuteten Transportrichtung gleichgerichtet oder entgegengesetzt verlaufenden zweiten, durch Pfeile 41 angedeuteten Transportrichtung zuführenden Fördermittel 04,
- einem dritten, auch als Umverpackstücke 07 bezeichnete Umverpackungen 05 mit in diese eingesetzen Artikeln 02 in einer bevorzugt parallel zur durch Pfeile 31 angedeuteten ersten und zur durch Pfeile 41 angedeuteten zweiten Transportrichtung gleichgerichtet oder entgegengesetzt verlaufenden, durch einen Pfeil 61 angedeuteten dritten Transportrichtung abtransportierenden Fördermittel 06,
- einer zwischen dem zweiten Fördermittel 04 und dem dritten Fördermittel 06 angeordneten Einsetzfläche 08,
- einer Einrichtung 09 zum durch Pfeile 91 angedeuteten Transfer zugeführter Umverpackungen 05 von dem zweiten Fördermittel 04 zur Einsetzfläche 08,
- einer Einrichtung zum durch Pfeile 101 angedeuteten Umsetzen von Artikeln 02 von dem ersten Fördermittel 03 in auf die Einsetzfläche 08 transferierte Umverpackungen 08, und
- einer Einrichtung 11 zum durch Pfeile 111 angedeuteten Transfer von auch als Umverpackstücke 07 bezeichneten Umverpackungen 05 mit in diese eingesetzen Artikeln 02 von der Einsetzfläche 08 auf das dritte Fördermittel 06,
wobei die Einrichtung 09 zum Transfer zugeführter Umverpackungen 05 von dem zweiten Fördermittel 04 zur Einsetzfläche 08 und die Einrichtung 11 zum Transfer von auch als Umverpackstücke 07 bezeichneten Umverpackungen 05 mit in diese eingesetzen Artikeln 02 von der Einsetzfläche 08 auf das dritte Fördermittel 06 in einer gemeinsamen Transfereinrichtung 12 zusammengefasst sein können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Artikel
- 03: erstes Fördermittel
- 04: zweites Fördermittel
- 05: Umverpackung
- 06: drittes Fördermittel
- 07: Umverpackstück (Umverpackung mit in diese eingesetzten Artikeln)
- 08: Einsetzfläche
- 09: Einrichtung zum Transfer
- 10: Einrichtung zum Umsetzen
- 11: Einrichtung zum Transfer
- 12: Transfereinrichtung
- 13: Gefachung
- 14: Einrichtung
- 21: Artikelgruppe
- 31: Pfeil
- 32: Partie
- 41: Pfeil
- 42: Partie
- 61: Pfeil
- 62: Partie
- 81: Pfeil
- 82: Bereich
- 83: Doppelpfeil
- 91: Pfeil
- 101: Pfeil
- 111: Pfeil

## Patentansprüche

1. Vorrichtung (01) zum Umgang mit Artikeln (02), umfassend:
- ein erstes Fördermittel (03) zur Zufuhr von Artikeln (02),
- ein zweites Fördermittel (04) zur Zufuhr von Umverpackungen (05),
- ein drittes Fördermittel (06) zum Abtransport von Umverpackungen (07) mit in diese eingesetzten Artikeln (02), und
- eine zwischen dem zweiten Fördermittel (04) und dem dritten Fördermittel (06) angeordnete Einsetzfläche (08), sowie
- eine Einrichtung (09) zum Transfer zugeführter Umverpackungen (05) von dem zweiten Fördermittel (04) zur Einsetzfläche (08),
- eine Einrichtung (10) zum Umsetzen von Artikeln (02) von dem ersten Fördermittel (03) in auf die Einsetzfläche (08) transferierte Umverpackungen (08), und
- eine Einrichtung (11) zum Transfer von Umverpackungen (07) mit in diese eingesetzten Artikeln (02) von der Einsetzfläche (08) auf das dritte Fördermittel (06)
**dadurch gekennzeichnet, dass** vor oder nach dem Einsetzen der Artikel (02) in auf die Einsetzfläche (08) transferierte Umverpackungen (05) Gefache (13) in die Umverpackungen (05) eingesetzt werden, wobei eine separate Einbringungsfläche zwischen zweitem Fördermittel (04) und der Einsetzfläche (08) im Falle der Einbringung von Gefachen (13) vor dem Einsetzen der Artikel (02), oder zwischen der Einsetzfläche (08) und drittem Fördermittel (06) im Falle der Einbringung von Gefachen (13) nach dem Einsetzen der Artikel (02) vorgesehen ist.

2. Vorrichtung nach Anspruch 1, wobei die Einrichtung (09) zum Transfer von Umverpackungen (05) von dem zweiten Fördermittel (04) auf die Einsetzfläche (08) die Einrichtung (11) zum Transfer von Umverpackungen (07) mit in diese eingesetzten Artikeln (02) von der Einsetzfläche (08) auf das dritte Fördermittel (06) oder eines oder mehrere Teile der Einrichtung (11) zum Transfer von Umverpackungen (07) mit in diese eingesetzten Artikeln (02) von der Einsetzfläche (08) auf das dritte Fördermittel (06) umfasst, oder vollständig oder teilweise von der Einrichtung (11) zum Transfer von Umverpackungen (07) mit in diese eingesetzten Artikeln (02) von der Einsetzfläche (08) auf das dritte Fördermittel (06) umfasst ist.

3. Vorrichtung nach Anspruch 1 oder 2, wobei das zweite Fördermittel (04) und das dritte Fördermittel (06) zumindest im Bereich (82) ihrer an die Einsetzfläche (08) angrenzenden Partien (42, 62) parallel zueinander angeordnet sind.

4. Vorrichtung nach Anspruch 3, wobei das erste Fördermittel (03) parallel zum zweiten Fördermittel (04) und zum dritten Fördermittel (06) verläuft.

5. Vorrichtung nach Anspruch 3 oder 4, wobei die parallel zueinander angeordneten Partien (32, 42, 62) der Fördermittel (03, 04, 06) einander um die Länge (83) wenigstens zweier Umverpackungen überlappen.

6. Vorrichtung nach einem der voranstehenden Ansprüche, wobei die von der Einrichtung (09) zum Transfer von leeren Umverpackungen (05) praktizierte Richtung des Transfers von Umverpackungen (05) vom zweiten Fördermittel (04) zur Einsetzfläche (08) in horizontaler Richtung orthogonal zur Transportrichtung (41) des zweiten Fördermittels (04) verläuft.

7. Vorrichtung nach einem der voranstehenden Ansprüche, wobei die von der Einrichtung (11) zum Transfer von Umverpackungen (05, 07) mit in diesen eingesetzten Artikeln (02) praktizierte Richtung des Transfers von (05, 07) mit in diesen eingesetzten Artikeln (02) von der Einsetzfläche (08) zum dritten Fördermittel (06) in horizontaler Richtung orthogonal zur Transportrichtung (61) des dritten Fördermittels (06) verläuft.

8. Vorrichtung nach einem der voranstehenden Ansprüche, wobei die Einrichtung (09) zum Transfer von Umverpackungen (05) von dem zweiten Fördermittel (04) auf die Einsetzfläche (08) und/oder die Einrichtung (11) zum Transfer von Umverpackungen (07) mit in diese eingesetzten Artikeln (02) von der Einsetzfläche (08) auf das dritte Fördermittel (06) mindestens einen Schieber umfasst.

9. Vorrichtung nach einem der voranstehenden Ansprüche, wobei das zweite Fördermittel (04) und das dritte Fördermittel (06) sowie die Einsetzfläche (08) auf einem gemeinsamen, ersten Niveau liegen, und das erste Fördermittel (03) auf einem höheren, zweiten Niveau liegt.

10. Vorrichtung nach Anspruch 9, wobei das zweite Niveau zumindest um die Höhe einer gegebenenfalls zunächst offenen und nach dem Einsetzen von Artikeln (02) zu schließenden Umverpackung (05, 07) oberhalb des ersten Niveaus liegt.

11. Vorrichtung nach einem der voranstehenden Ansprüche, wobei das Verschließen der Umverpackungen (07) mit in diese eingesetzten Artikeln (02) noch auf der Einsetzfläche (08), oder in einem separaten Behandlungsschritt erfolgt.

12. Vorrichtung nach einem der voranstehenden Ansprüche, wobei eine zusätzliche Einrichtung zum Transfer von mit Gefachen (13) versehenen Umverpackungen (05) von der Einbringungsfläche zur Einsetzfläche (08) oder von der Einsetzfläche (08) zur Einbringungsfläche vorgesehen ist.

13. Verfahren zum Umgang mit Artikeln (02), welches vorsieht, in einem oder in mehreren Artikelströmen aus geschlossen und/oder lückenhaft hintereinander gereiht und/oder gruppiert zugeführte Artikel (02) in auf einer Einsetzfläche (08) bereitstehende Umverpackungen (05) einzusetzen (101), welche wiederum selbst unabhängig von den Artikeln (02) in einer Transportrichtung (41) zugeführt und einzeln oder gruppenweise quer zu der Transportrichtung (41) auf die Einsetzfläche (08) transferiert (91) und von dort aus nach dem Einsetzen von Artikeln (02) wiederum einzeln oder gruppenweise quer zu der Transportrichtung (41) - nunmehr mit in sie eingesetzten Artikeln (02) versehen - transferiert (111) werden, um anschließend unabhängig von der Zufuhr (31) von Artikeln (02), unabhängig von der Zufuhr (41) von Umverpackungen (05) und unabhängig vom Einsetzen (101) von Artikeln (02) in die Umverpackungen (05) in Richtung der Transportrichtung (41) oder entgegengesetzt zu dieser parallel zur Transportrichtung (41) abtransportiert zu werden, **dadurch gekennzeichnet, dass** Gefache in die Umverpackungen eingebracht werden, wobei die Einbringung von Gefachen auf einer separaten Einbringungsfläche zwischen zweitem Fördermittel und der Einsetzfläche im Falle der Einbringung vor dem Einsetzen der Artikel, oder zwischen der Einsetzfläche und drittem Fördermittel im Falle der Einbringung nach dem Einsetzen der Artikel erfolgt.

## Claims

1. Device (01) for handling articles (02) comprising:
- a first conveying means (03) for the supply of articles (02),
- a second conveying means (04) for the supply of outer packagings (05),
- a third conveying means (06) for the removal of outer packagings (07) with articles (02) placed therein, and
- a placing surface (08) arranged between the second conveying means (04) and the third conveying means (06), as well as
- a device (09) for transferring supplied outer packagings (05) from the second conveying means (04) to the placing surface (08),
- a device (10) for transplacing articles (02) from the first conveying means (03) into outer packagings (05) having been transferred onto the placing surface (08), and
- a device (11) for transferring outer packagings (07) with articles (02) placed therein from the placing surface (08) onto the third conveying means (06) **characterized in that** prior to or after placing the articles (02) into the outer packagings (05) having been transferred onto the placing surface (08), compartments (13) are inserted into the outer packagings (05),
wherein a separate introduction surface is provided between the second conveying means (04) and the placing surface (08) in the instance of introducing compartments (13) prior to placing the articles (02), or between the placing surface (08) and the third conveying means (06) in the instance of introducing compartments (13) after placing the articles (02).

2. Device as recited in claim 1, wherein the device (09) for transferring outer packagings (05) from the second conveying means (04) onto the placing surface (08) comprises the device (11) for transferring outer packagings (07) with articles (02) placed therein from the placing surface (08) onto the third conveying means (06), or comprises one or a plurality of parts of the device (11) for transferring outer packagings (07) with articles (02) placed therein from the placing surface (08) onto the third conveying means (06), or it is completely or partly comprised by the device (11) for transferring outer packagings (07) with articles (02) placed therein from the placing surface (08) onto the third conveying means (06).

3. Device as recited in claim 1 or 2, wherein the second conveying means (04) and the third conveying means (06) are arranged in parallel to each other at least in the area (82) of their portions (42, 62) abutting on the placing surface (08).

4. Device as recited in claim 3, wherein the first conveying means (03) runs in parallel to the second conveying means (04) and to the third conveying means (06).

5. Device as recited in claim 3 or 4, wherein the parallely arranged portions (32, 42, 62) of the conveying means (03, 04, 06) overlap one another by the length (83) of at least two outer packagings.

6. Device as recited in one of the previous claims, wherein the direction of the transfer of outer packagings (05) being carried out by the device (09) for transferring empty outer packagings (05) from the second conveying means (04) to the placing surface (08), runs, in a horizontal direction, in orthogonal to the transport direction (41) of the second conveying means (04).

7. Device as recited in one of the previous claims, wherein the direction of the transfer of outer packagings (05, 07) with articles (02) placed therein being carried out by the device (11) for transferring outer packagings (05, 07) with articles (02) placed therein from the placing surface (08) to the third conveying means (06), runs, in a horizontal direction, in orthogonal to the transport direction (61) of the third conveying means (06).

8. Device as recited in one of the previous claims, wherein the device (09) for transferring outer packagings (05) from the second conveying means (04) onto the placing surface (08) and/or the device (11) for transferring outer packagings (07) with articles (02) placed therein from the placing surface (08) onto the third conveying means (06) comprises at least one slider.

9. Device as recited in one of the previous claims, wherein the second conveying means (04) and the third conveying means (06) as well as the placing surface (08) are located on a common, first level, and the first conveying means (03) is located on a higher, second level.

10. Device as recited in claim 9, wherein the second level is located above the first level by at least the height of an outer packaging (05, 07), which is initially open and to be closed after placing the articles (02) therein, as the case may be.

11. Device as recited in one of the previous claims, wherein the closing of the outer packagings (07) with articles (02) placed therein is carried out while still on the placing surface (08) or in a separate treatment step.

12. Device as recited in one of the previous claims, wherein an additional device is provided for transferring outer packagings (05) provided with compartments (13) from the introduction surface to the placing surface (08) or from the placing surface (08) to the introduction surface.

13. Method for handling articles (02), which method provides that articles (02) are placed (101) into outer packagings (05) staged on a placing surface (08), which articles (02) are supplied in one or in a plurality of article flows of articles (02) lined up one after the other uninterruptedly and/or with gaps between them and/or grouped, which outer packagings (05) themselves in turn are supplied independently of the articles (02) in a transport direction (41) and are transferred (91) onto the placing surface (08) individually or groupwise transversely to the transport direction (41) and, after the articles (02) have been placed therein, they are transferred (111) from there in turn individually or groupwise transversely to the transport direction (41) - now provided with articles (02) placed therein - in order to be subsequently discharged in the direction of the transport direction (41) or opposite to it in parallel to the transport direction (41) independently of the supply (31) of articles (02), independently of the supply (41) of outer packagings (05), and independently of the placing (101) of articles (02) into the outer packagings (05), **characterized in that** compartments are inserted into the outer packagings, wherein the introduction of the compartments takes place on a separate introduction surface provided between the second conveying means and the placing surface in the instance of introducing compartments prior to placing the articles, or between the placing surface and the third conveying means in the instance of introducing compartments after placing the articles.

## Revendications

1. Dispositif (01) pour la manutention d'articles (02), comprenant :
- un premier moyen de transport (03) pour introduire des articles (02),
- un deuxième moyen de transport (04) pour introduire des suremballages (05),
- un troisième moyen de transport (06) pour enlever des suremballages (07) avec des articles (2) mis en oeuvre dedans, et
- une aire de mise en oeuvre (08) disposée entre le deuxième moyen de transport (04) et le troisième moyen de transport (06), ainsi qu'
- un dispositif (09) pour transférer du deuxième moyen de transport (04) à l'aire de mise en oeuvre (08) les suremballages introduits (05),
- un dispositif (10) pour déplacer des articles (02) du premier moyen de transport (03) dans des suremballages (07) transférés sur l'aire de mise en oeuvre (08), et
- un dispositif (11) pour transférer des suremballages (07) avec les articles (02) mis en oeuvre dedans, de l'aire de mise en oeuvre (08) au troisième moyen de transport (06),
**caractérisé en ce que**, avant ou après que les articles (02) ont été mis en oeuvre dans les suremballages (05) transférés sur l'aire de mise en oeuvre (08), des cases (13) sont mise en oeuvre dans les suremballages (05), une aire de mise en place séparée étant prévue entre le deuxième moyen de transport (04) et l'aire de mise en oeuvre (08) si les cases (13) sont mises en place avant que ne soient mis en oeuvre les articles (02), ou entre l'aire de mise en oeuvre (08) et le troisième moyen de transport (06) si les cases (13) sont mises en place après que les articles ont été mis en oeuvre.

2. Dispositif selon la revendication 1, le dispositif (09) pour transférer des suremballages (05) du deuxième moyen de transport (04) à l'aire de mise en oeuvre (08) comprenant le dispositif (11) pour transférer des suremballages (07) avec les articles (02) mis en oeuvre dedans, de l'aire de mise en oeuvre (08) au troisième moyen de transport (06), ou une ou plusieurs parties du dispositif (11) de transfert de suremballages (07) avec des articles (02) mis en oeuvre dedans, de l'aire de mise en oeuvre (08) au troisième moyen de transport (06), ou étant compris intégralement ou partiellement dans le dispositif (11) de transfert d'emballages (07) avec articles (02) mis en oeuvre dedans, de l'aire de mise en oeuvre (08) au troisième moyen de transport (06).

3. Dispositif selon la revendication 1 ou 2, le deuxième moyen de transport (04) et le troisième moyen de transport (06) étant agencés de manière à être parallèles l'un à l'autre au moins dans la zone (82) de leurs parties (42, 62) adjacentes à l'aire de mise en oeuvre (08).

4. Dispositif selon la revendication 3, le premier moyen de transport (03) étant parallèle au deuxième moyen de transport (04) et au troisième moyen de transport (06).

5. Dispositif selon la revendication 3 ou 4, les parties (32, 42, 62) des moyens de transport (03, 04, 06), qui sont agencées de manière parallèle l'une à l'autre, se chevauchant l'une l'autre de la longueur (83) d'au moins deux suremballages.

6. Dispositif selon l'une quelconque des revendications précédentes, le sens du transfert de suremballages (05) du deuxième moyen de transport (04) à l'aire de mise en oeuvre (08), emprunté par le dispositif (09) de transfert de suremballages vides (05), étant dans le sens horizontal à l'orthogonale du sens de transport (41) du deuxième moyen de transport (04).

7. Dispositif selon l'une quelconque des revendications précédentes, le sens du transfert de suremballages (05, 07) avec des articles (02) mis en oeuvre dedans, de l'aire de mise en oeuvre (08) au troisième moyen de transport (06), emprunté par le dispositif (11) de transfert de suremballages (05, 07) d'articles (02) mis en oeuvre dedans, étant dans le sens horizontal à l'orthogonale du sens de transport (61) du troisième moyen de transport (06).

8. Dispositif selon l'une quelconque des revendications précédentes, le dispositif (09) de transfert de suremballages (05) du deuxième moyen de transport (04) à l'aire de mise en oeuvre (08) et/ou le dispositif (11) de transfert de suremballages (07) avec des articles (02) mis en oeuvre dedans, de l'aire de mise en oeuvre (08) au troisième moyen de transport (06) comprenant au moins un racloir.

9. Dispositif selon l'une quelconque des revendications précédentes, le deuxième moyen de transport (04) et le troisième moyen de transport (06) ainsi que l'aire de mise en oeuvre (08) se trouvant à un premier niveau commun, et le premier moyen de transport (03) se trouvant à un deuxième niveau plus élevé.

10. Dispositif selon la revendication 9, le deuxième niveau se trouvant au-dessus du premier niveau, et ce d'une distance au moins égale à la hauteur d'un suremballage (05, 07) tout d'abord éventuellement ouvert puis à fermer après la mise en oeuvre d'articles (02).

11. Dispositif selon l'une quelconque des revendications précédentes, la fermeture des suremballages (07) avec les articles (02) mis en oeuvre dedans s'effectuant directement sur l'aire de mise en oeuvre (08) ou au cours d'une étape de traitement séparée.

12. Dispositif selon l'une quelconque des revendications précédentes, un dispositif supplémentaire étant prévu pour le transfert de suremballages (05) dotés de cases (13), de l'aire de mise en place à l'aire de mise en oeuvre (08) ou de l'aire de mise en oeuvre (08) à l'aire de mise en place.

13. Procédé pour la manutention d'articles (02) qui prévoit de mettre en oeuvre, à partir d'un ou de plusieurs flux d'articles, des articles (02) introduits en groupe et/ou en rang l'un derrière l'autre sans et/ou avec interruption, dans des suremballages (05) disponibles sur une aire de mise en oeuvre (08), lesquels suremballages sont à leur tour introduits, eux-mêmes indépendamment des articles (02), dans un sens de transport (41), et transférés (91) individuellement ou en groupe, transversalement au sens de transport (41), sur l'aire de mise en oeuvre (08) pour être transférés à partir de là, après la mise en oeuvre d'articles (02), à leur tour individuellement ou en groupe et transversalement au sens de transport (41), dotés dorénavant des articles (02) mis en oeuvre dedans, pour être ensuite enlevés parallèlement au sens de transport (41) indépendamment de l'introduction (31) d'articles (02), indépendamment de l'introduction (41) de suremballages (05) et indépendamment de la mise en oeuvre (101) d'articles (02) dans les suremballages (05) dans le sens du sens de transport (41) ou dans le sens opposé de celui-ci, **caractérisé en ce que** des cases sont mises en place dans les suremballages, la mise en place de cases s'effectuant sur une aire de mise en place séparée entre le deuxième moyen de transport et l'aire de mise en oeuvre, si la mise en place survient avant que les articles ne soient mis en oeuvre, ou entre l'aire de mise en oeuvre et un troisième moyen de transport si la mise en place a lieu après que les articles ont été mis en oeuvre.
